(19) Europäisches Patentamt
European Patent Office
Office européen des brevets

(11) **EP 3 019 957 B1**

(12) **FASCICULE DE BREVET EUROPEEN**

(45) Date de publication et mention
de la délivrance du brevet:
**18.03.2020 Bulletin 2020/12**

(21) Numéro de dépôt: **14736856.7**

(22) Date de dépôt: **09.07.2014**

(51) Int Cl.:
***G06F 9/50*** (2006.01)

(86) Numéro de dépôt international:
**PCT/EP2014/064758**

(87) Numéro de publication internationale:
**WO 2015/004207 (15.01.2015 Gazette 2015/02)**

(54) **PROCEDE D'OPTIMISATION DE TRAITEMENT PARALLELE DE DONNEES SUR UNE PLATEFORME MATERIELLE**

VERFAHREN ZUR OPTIMIERUNG DER PARALLELEN VERARBEITUNG VON DATEN AUF EINER HARDWAREPLATTFORM

METHOD FOR OPTIMISING THE PARALLEL PROCESSING OF DATA ON A HARDWARE PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2013 FR 1301633**

(43) Date de publication de la demande:
**18.05.2016 Bulletin 2016/20**

(73) Titulaire: **Thales**
**92200 Neuilly Sur Seine (FR)**

(72) Inventeurs:
• **BARRERE, Rémi**
**F-91767 Palaiseau (FR)**
• **BRELET, Paul**
**F-91767 Palaiseau (FR)**
• **BARRETEAU, Michel**
**F-91767 Palaiseau (FR)**
• **LENORMAND, Eric**
**F-91767 Palaiseau (FR)**

(74) Mandataire: **Lavoix**
**2, place d'Estienne d'Orves**
**75441 Paris Cedex 09 (FR)**

(56) Documents cités:
WO-A1-2008/148624    WO-A1-2010/092483
US-A1- 2009 106 008    US-A1- 2012 185 867
US-B1- 7 743 087

**Description**

La présente invention concerne un procédé d'optimisation de traitement parallèle de données sur une plateforme matérielle comprenant une pluralité d'unités de traitement. L'invention se rapporte également à un programme d'ordinateur adapté pour la mise en œuvre du procédé d'optimisation de traitement parallèle de données.

L'invention se situe plus généralement dans le domaine des applications de programmation aptes à exécuter plusieurs tâches en parallèle et à traiter des données de manière parallèle, sur des architectures matérielles spécifiques.

Sont notamment considérées les architectures matérielles comprenant une pluralité d'unités de traitement ou cœurs de traitement, ou multi-cœurs (appelées architectures « multi-cores » en terminologie anglo-saxonne), et/ou multi-nœuds. Les unités centrales Central Processing Unit (CPU) multi-cœurs ou les cartes graphiques Graphics Processing Unit (GPU) sont des exemples de telles architectures matérielles.

Une carte graphique GPU comprend un grand nombre de processeurs de calcul, typiquement des centaines, le terme d'architecture « many-cores » ou architecture massivement parallèle est alors employé. Initialement dédiées aux calculs relatifs au traitement de données graphiques, stockées sous forme de tableaux de pixels à deux ou trois dimensions, les cartes graphiques GPU sont actuellement utilisées de manière plus générale pour tout type de calcul scientifique nécessitant une grande puissance de calcul et un traitement parallèle des données.

Classiquement, la mise en œuvre d'un traitement de données parallèle sur une architecture parallèle se fait par la conception d'une application de programmation utilisant un langage approprié permettant d'effectuer à la fois du parallélisme de tâches et du parallélisme de données. Les langages OpenMP (Open Multi-Processing) ou OpenCL (Open Computing Language) sont des exemples de langages adaptés à ce type d'application.

Les langages de programmation parallèle offrent de nombreuses possibilités, quant à la répartition des calculs à effectuer, au nombre de tâches à exécuter en parallèle et au découpage de données en groupes de données à traiter en parallèle. Ainsi, la conception de code de programmation optimisé pour une exécution en parallèle est difficile à obtenir pour le développeur qui utilise le langage.

De plus, l'optimisation en termes de temps d'exécution est fortement dépendante de l'architecture de la plateforme matérielle sur laquelle le code de l'application de programmation est exécuté. Par exemple, typiquement, le nombre de tâches exécutables en parallèle est dépendant du nombre d'unités de traitement disponibles, mais la rapidité d'exécution est également dépendante de la rapidité des accès mémoire et des transferts de données.

Ainsi, il a été constaté que le temps d'exécution du code d'une application de programmation est variable selon l'architecture matérielle des processeurs ou cartes graphiques mis en œuvre.

Il existe donc un besoin pour faciliter la génération de code de programmation optimisé pour le traitement parallèle de données sur une plateforme matérielle comportant une pluralité d'unités de traitement.

Il est proposé un procédé d'optimisation de traitement parallèle de données sur une plateforme matérielle, la plateforme matérielle comprenant :

- au moins une unité de calcul comprenant une pluralité d'unités de traitement aptes à exécuter en parallèle une pluralité de tâches exécutables sur un espace de traitement, l'espace de traitement étant un espace dans lequel une même suite d'opérations est effectué sur l'ensemble des données, l'espace de traitement étant décomposable en sous-ensembles de traitement, chaque sous-ensemble réalisant ce même traitement sur un sous-ensemble de données,

le procédé étant caractérisé en ce que le procédé comprend les étapes de :

- obtention d'un nombre maximal de tâches exécutables en parallèle par une unité de calcul de la plateforme matérielle,
- détermination des tailles des sous-ensembles de données de l'espace de traitement par une même suite d'opérations pour obtenir des tailles déterminées,
- optimisation de la taille d'au moins un sous-ensemble de données de l'espace de traitement, l'optimisation comprenant une étape de :

  - sélection, pour au moins un sous-ensemble considéré, d'au moins un nombre entier strictement supérieur à la taille déterminée et multiple de nombres inférieurs à la taille déterminée du sous-ensemble considéré, le ou les nombres inférieurs à la taille prédéterminée du sous-ensemble considéré étant de préférence 2, 4 ou 8,
  - génération, pour chaque sous-ensemble considéré à l'étape de sélection, d'un sous-ensemble de calcul ayant pour taille le nombre entier sélectionné à partir du sous-ensemble et comprenant toutes les données du sous-ensemble considéré, le sous-ensemble de calcul remplaçant le sous-ensemble de données considéré dans l'espace de traitement, pour obtenir un nouvel espace de traitement,

l'optimisation étant mise en œuvre de manière à obtenir une mesure de performance d'exécution améliorée pour le nouvel espace de traitement par rapport à la mesure de performance d'exécution obtenue pour l'espace de traitement dans lequel le sous-ensemble de données considéré a la taille déterminée selon au moins un critère choisi, la mesure étant associée à l'exécution d'un programme comportant des instructions de code de programme mettant en œuvre un découpage de traitement correspondant au découpage de l'espace de traitement considéré en sous-ensembles de données, et à l'assignation d'au moins une tâche exécutable, apte à exécuter ladite suite d'opérations, à chaque sous-ensemble de données, le nombre total de tâches exécutables par sous-ensemble de données étant inférieur ou égal audit nombre maximal de tâches.

Suivant des modes de réalisation particuliers, le procédé comprend une ou plusieurs des caractéristiques suivantes, prise(s) isolément ou suivant toute combinaison techniquement possible :

- les nombres inférieurs à la taille déterminée du sous-ensemble considéré sont issus d'un fichier paramétrable.
- l'étape d'optimisation comprend pour chaque taille de sous-ensemble, une étape de détermination du découpage de traitement permettant de minimiser la mesure de performance d'exécution associée à l'exécution d'un programme comportant des instructions de code de programme mettant en œuvre le découpage de traitement.
- l'étape de détermination du découpage de traitement comporte, en outre, une étape de détermination d'au moins deux découpages de traitement, d'obtention d'un programme comportant des instructions de code de programmation mettant en œuvre ledit découpage de traitement, d'obtention de la valeur d'une mesure de performance d'exécution associée au critère choisi et à l'exécution dudit programme sur ladite plateforme matérielle et de sélection du découpage de traitement permettant d'obtenir une valeur de mesure optimale respectant le critère choisi.
- les critères choisis comprennent un premier critère et un deuxième critère différent du premier critère, l'étape de détermination du découpage de traitement comportant, en outre, une étape de détermination d'au moins deux découpages de traitement, d'obtention d'un programme comportant des instructions de code de programmation mettant en œuvre ledit découpage de traitement, d'obtention de la valeur de mesures de performance d'exécution associées respectivement au premier critère et au deuxième critère et à l'exécution dudit programme sur ladite plateforme matérielle, de première sélection des découpages de traitement permettant d'obtenir une pluralité de valeurs de mesure optimale respectant le premier critère choisi et de deuxième sélection du découpage de traitement permettant d'obtenir une valeur de mesure optimale selon le deuxième critère choisi parmi les découpages de traitement sélectionnés à l'étape de première sélection.
- le procédé comporte, en outre, une étape d'obtention d'informations permettant de générer des instructions de code de programmation mettant en œuvre ledit découpage de traitement sélectionné.
- ladite valeur d'une mesure de performance d'exécution associée au premier critère est un temps d'exécution sur ladite plateforme matérielle.

La présente invention a également pour objet un produit programme d'ordinateur comportant des instructions de code de programmation aptes à être mises en œuvre par un processeur. Le programme est apte à mettre en œuvre un procédé d'optimisation de traitement parallèle de données sur une plateforme matérielle tel que mentionné précédemment.
A cet effet, il est également proposé un procédé d'optimisation de traitement parallèle de données sur une plateforme matérielle, la plateforme matérielle comprenant au moins une unité de calcul comprenant une pluralité d'unités de traitement aptes à exécuter en parallèle une pluralité de tâches exécutables, et les données à traiter formant un ensemble de données décomposable en sous-ensembles de données, une même suite d'opérations étant effectuée sur chaque sous-ensemble de données. Le procédé comprend les étapes d'obtention d'un nombre maximal de tâches exécutables en parallèle par une unité de calcul de la plateforme matérielle, de détermination des tailles des sous-ensembles de données à traiter par une même suite d'opérations, et d'optimisation de la taille d'au moins un sous-ensemble de données à traiter de manière à obtenir une mesure de performance d'exécution améliorée par rapport à la taille déterminée selon au moins un critère choisi, la mesure étant associée à l'exécution d'un programme comportant des instructions de code de programme mettant en œuvre un découpage de traitement correspondant au découpage de l'ensemble de données en un nombre de groupes de données, et à l'assignation d'au moins une tâche exécutable, apte à exécuter ladite suite d'opérations, à chaque sous-ensemble de données dudit groupe de données, le nombre total de tâches exécutables par groupe de données étant intérieur ou égal audit nombre maximal de tâches.
Suivant des modes de réalisation particuliers, le procédé tel que décrit au paragraphe précédent comprend une ou plusieurs des caractéristiques suivantes, prise(s) isolément ou suivant toute combinaison techniquement possible :

- l'étape d'optimisation comprend une étape de sélection, pour au moins un sous-ensemble considéré, d'au moins un nombre entier strictement supérieur à la taille déterminée et multiple de nombres inférieurs à la taille déterminée du sous-ensemble considéré, le ou les nombres inférieurs à la taille prédéterminée du sous-ensemble considéré étant de préférence 2, 4 ou 8 .

- les nombres inférieurs à la taille déterminée du sous-ensemble considéré sont issus d'un fichier paramétrable.
- l'étape d'optimisation comprend, en outre, une étape de génération d'un sous-ensemble de calcul ayant pour taille le nombre entier sélectionné à partir du sous-ensemble et comprenant toutes les données du sous-ensemble considéré.
- l'étape d'optimisation comprend pour chaque taille de sous-ensemble, une étape de détermination du découpage de traitement permettant de minimiser la mesure de performance d'exécution associée à l'exécution d'un programme comportant des instructions de code de programme mettant en œuvre le découpage de traitement.
- l'étape de détermination du découpage de traitement comporte, en outre, une étape de détermination d'au moins deux découpages de traitement, une étape d'obtention d'un programme comportant des instructions de code de programmation mettant en œuvre ledit découpage de traitement, une étape d'obtention de la valeur d'une mesure de performance d'exécution associée au critère choisi et à l'exécution dudit programme sur ladite plateforme matérielle, et une étape de sélection du découpage de traitement permettant d'obtenir une valeur de mesure optimale respectant le critère choisi.
- les critères choisis comprennent un premier critère et un deuxième critère différent du premier critère, l'étape de détermination du découpage de traitement comportant, en outre, une étape de détermination d'au moins deux découpages de traitement, une étape d'obtention d'un programme comportant des instructions de code de programmation mettant en œuvre ledit découpage de traitement, une étape d'obtention de la valeur de mesures de performance d'exécution associées respectivement au premier critère et au deuxième critère et à l'exécution dudit programme sur ladite plateforme matérielle, une étape de première sélection des découpages de traitement permettant d'obtenir une pluralité de valeurs de mesure optimale respectant le premier critère choisi, et une étape de deuxième sélection du découpage de traitement permettant d'obtenir une valeur de mesure optimale selon le deuxième critère choisi parmi les découpages de traitement sélectionnés à l'étape de première sélection.
- le procédé comporte, en outre, une étape d'obtention d'informations permettant de générer des instructions de code de programmation mettant en œuvre ledit découpage de traitement sélectionné.
- ladite valeur d'une mesure de performance d'exécution associée au premier critère est un temps d'exécution sur ladite plateforme matérielle.

La présente invention a également pour objet un programme d'ordinateur comportant des instructions de code de programmation aptes à être mises en œuvre par un processeur. Le programme est apte à mettre en œuvre un procédé d'optimisation de traitement parallèle de données sur une plateforme matérielle tel que mentionné précédemment.

D'autres caractéristiques et avantages de l'invention apparaîtront à la lecture de la description qui suit de modes de réalisation de l'invention, donnée à titre d'exemple uniquement et en référence aux dessins qui sont :

- la figure 1, un schéma d'une plateforme matérielle à multiples unités de traitement,
- la figure 2, une représentation schématique de partage d'espaces mémoire,
- la figure 3, une illustration de trois découpages de traitement d'un tableau monodimensionnel,
- la figure 4, un découpage de traitement de tableau bi-dimensionnel, et
- la figure 5, un organigramme d'un procédé d'optimisation de traitement parallèle des données selon l'invention.

L'invention sera décrite dans son application pour l'optimisation de code de programmation pour une plateforme matérielle comprenant une ou plusieurs cartes graphiques GPU, le code de programmation étant en langage OpenCL.

De manière plus générale, l'invention s'applique sur toute plateforme matérielle de haute performance à multiples unités de traitement, en particulier sur des plateformes hétérogènes incluant à la fois cartes graphiques GPU et processeurs généralistes multi-cœurs, et avec d'autres langages de programmation adaptés à la programmation parallèle.

L'invention s'applique également lorsque la plateforme matérielle est constituée de plusieurs plateformes matérielles de haute performance, ces plateformes étant aptes à communiquer via des communications réseau, par exemple en utilisant du « message passing ».

WO 2010/092483 enseigne que, selon un mode de réalisation d'un procédé de l'invention, au moins une partie de données à traiter est chargée dans une mémoire tampon de capacité (B). La mémoire tampon est accessible à N unités de traitement d'un système informatique. La tâche de traitement est divisée en fils d'exécution de traitement. Un nombre optimal (n) de fils d'exécution de traitement est déterminé par une unité d'optimisation du système informatique. Les n fils d'exécution de traitement sont attribués à la tâche de traitement et exécutés par une ou plusieurs des N unités de traitement. Après traitement par une ou plusieurs des N unités de traitement, les données traitées sont stockées sur un disque défini par des secteurs de disque, chaque secteur de disque ayant une capacité de stockage (S). La capacité de mémorisation (B) de la mémoire tampon est optimisée à un multiple X de la capacité de stockage de secteur (S). Le nombre optimal (n) est déterminé sur la base, au moins en partie, de N, B et S. Le système et le procédé peuvent être mis en oeuvre dans un système informatique multiprocesseur multifil d'exécution. Les données chiffrées mémorisées peuvent être rappelées ultérieurement et déchiffrées en utilisant les mêmes système et procédé.

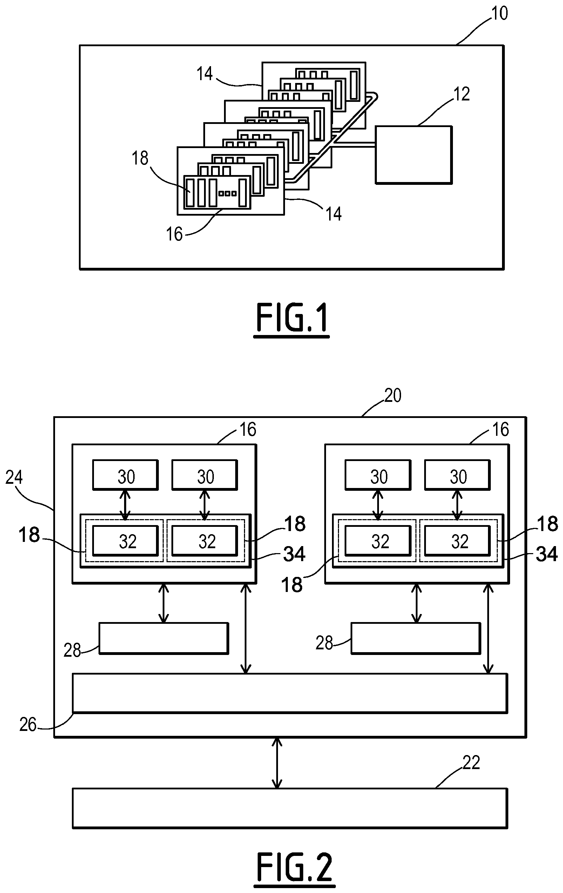

Comme illustré à la figure 1, un exemple de telle plateforme matérielle 10 comprend une machine serveur 12 et un ensemble de dispositifs de calcul 14.

La machine serveur 12 est adaptée à recevoir les instructions d'exécution et à distribuer l'exécution sur l'ensemble de dispositifs de calcul 14.

Les dispositifs de calcul 14 sont des multiprocesseurs. A titre d'exemple, les dispositifs de calcul 14 sont des cartes graphiques GPU.

Les dispositifs de calcul 14 sont en nombre quelconque. A titre d'illustration, quatre dispositifs de calcul 14 sont représentés sur la figure 1.

Les dispositifs de calcul 14 sont soit physiquement à l'intérieur de la machine serveur 12, soit à l'intérieur d'autres machines, ou nœuds de calcul, accessibles soit directement, soit via un réseau de communications. Selon l'exemple de la figure 1, les dispositifs de calcul 14 sont accessibles via un réseau de communications.

Les dispositifs de calcul 14 sont adaptés à mettre en œuvre des tâches exécutables transmises par la machine serveur 12. Ainsi, l'invention s'applique sur une plateforme de calcul distribuée multi-nœuds et/ou multi dispositifs de calcul.

Chaque dispositif de calcul 14 comporte une ou plusieurs unités de calcul 16. Dans le cas de la figure 1, chaque dispositif de calcul 14 comprend trois unités de calcul 16.

Chaque unité de calcul 16 comprenant une pluralité d'unités de traitement 18, ou cœurs de traitement, dans une architecture « multi-cœurs ».

La machine serveur 12 comprend au moins un processeur et une mémoire apte à stocker des données et des instructions.

En outre, la machine serveur 12 est adaptée à exécuter un programme d'ordinateur comportant des instructions de code mettant en œuvre un procédé d'optimisation de traitement parallèle de données proposé.

Par exemple, un programme mettant en œuvre le procédé d'optimisation de traitement parallèle de données proposé est codé en un langage de programmation logiciel connu comme le langage C ou C++.

Selon une variante, le programme met en œuvre le procédé d'optimisation de traitement parallèle de données proposé en instructions de code de type ISA (Instruction Set Architecture).

Un langage de programmation particulièrement adapté pour ce type de plateforme matérielle à architecture dite massivement parallèle est le langage OpenCL.

Le langage OpenCL a été conçu plus particulièrement pour des systèmes hétérogènes multi-cœurs, comprenant par exemple à la fois un CPU multi-cœurs et une ou plusieurs cartes graphiques GPU.

Le langage OpenCL permet de gérer à la fois le parallélisme des tâches exécutables et le parallélisme des données. Le langage OpenCL permet ainsi de gérer l'exécution en parallèle de tâches sur diverses unités de traitement disponibles et l'accès aux données dans des espaces mémoire séparés.

Dans la suite, pour simplifier la description, le procédé d'optimisation traitement parallèle de données proposé est décrit pour un dispositif de calcul 14 comprenant seulement deux unités de calcul 16. La généralisation à un nombre quelconque d'unités de calcul 16 est en effet directe.

La figure 2 illustre la hiérarchie des espaces mémoire définie par OpenCL, permettant l'accès parallèle aux données pour le dispositif de calcul 14 considéré.

Le modèle de mémoire 20 illustré à la figure 2 comprend un premier espace mémoire 22 et un deuxième espace mémoire 24.

Le premier espace mémoire 22 est dit « global » parce que le premier espace mémoire 22 est partagé par les deux unités de calcul 16 du dispositif de calcul 14.

En outre, dans le modèle proposé à la figure 2, l'espace mémoire global 22 est extérieur au dispositif de calcul 14. A titre d'illustration, c'est le cas dans une mémoire de type « off-chip » d'une carte graphique GPU.

Le deuxième espace mémoire 24 comprend un espace de mémoire constante 26, deux mémoires locales 28 et quatre mémoires privées 30.

Le deuxième espace mémoire 24 est situé dans le dispositif de calcul 14.

L'espace de mémoire constante 26 est propre à stocker des données constantes pour chaque accès en lecture seule pour les deux unités de calcul 16 du dispositif de calcul 14 durant l'exécution d'une tâche effectuant une suite d'opérations calculatoires.

Chaque mémoire locale 28 est associée à une unité de calcul 16. Chaque mémoire locale 28 est utilisée par une tâche 32 d'un groupe de tâches 34 exécutées par une des deux unités de traitement 18 de l'unité de calcul 16 de la figure 2. Dans la spécification OpenCL 1.0, la tâche 32 est également appelée par le terme anglais « work-item » et le groupe de tâches 34 par le terme « work-group ».

Chaque unité de calcul 16 comprend deux des quatre mémoires privées 30. Chaque mémoire privée 30 est associée à une unité de traitement 18 de l'unité de calcul 16.

En outre, chaque mémoire privée 30 a un fonctionnement analogue aux registres dans un CPU avec une seule unité de traitement.

Un espace de traitement OpenCL est un espace comprenant n dimensions, où n est un nombre entier compris entre 1 et 3.

De ce fait, il est possible de considérer l'espace de traitement comme une matrice multi-dimensionnelle. Chaque élément de la matrice multi-dimensionnelle correspond à une tâche 32 exécutable ou « work-item », effectuant une suite d'opérations calculatoires sur un sous-ensemble de données d'un ensemble de données à traiter.

Dans un exemple simple de mise en œuvre, les données à traiter sont des valeurs des pixels d'image numérique. L'ensemble des données forme un tableau bi-dimensionnel dont la taille est donnée par une première dimension p et une deuxième dimension q. p et q sont deux entiers naturels non nuls.

Dans le cas particulier d'une image prise selon la mise en page « paysage », la première dimension p est supérieure à la deuxième dimension q.

Dans la suite, à titre d'exemple, la première dimension p est égale à 1024 et la deuxième dimension q est égale à 768.

A titre d'illustration, il est supposé qu'un traitement numérique est appliqué à ces données. Ce traitement numérique est une tâche 32 exécutable.

Il est, par exemple, considéré une transformée de Fourier implémentée sous la forme d'une fonction FFT 1024. L'acronyme FFT renvoie à la terminologie anglais de « Fast Fourier Transform » pour transformée de Fourier rapide.

Une fonction FFT 1024 permet d'obtenir 1024 échantillons dans le domaine de Fourier à partir d'un sous-ensemble de données de 1024 valeurs de pixels.

Pour l'appliquer au tableau bi-dimensionnel proposé, une méthode utilisée en pratique pour mettre en œuvre la transformation FFT 1024 est d'effectuer la transfomation FFT 1024 pour chacun des 768 sous-ensembles de données du tableau comportant 1024 valeurs de pixels.

La transformation FFT 1024 constitue donc une suite d'opérations appliquées sur les 768 sous-ensembles de données de manière indépendante et donc parallélisable.

Dans cet exemple, l'espace de traitement définissant l'ensemble des tâches exécutables à effectuer sur des sous-ensembles de données peut être modélisé comme un tableau monodimensionnel, chaque élément du tableau correspondant à une tâche 32 - calcul de la transformée FFT 1024 - à exécuter sur un sous-ensemble de données, ici une ligne de valeur de pixels.

Selon la plateforme matérielle, un nombre maximal de tâches 32 exécutables sont aptes à être exécutées en parallèle par les unités de traitement présentes.

Dans cet exemple de réalisation, si, au maximum, 128 tâches 32 exécutables en parallèle sont disponibles, il existe plusieurs manières d'associer ces tâches exécutables 32 aux 768 sous-ensembles de données à traiter, ce qui permet d'en déduire plusieurs possibilités de découpages de traitement.

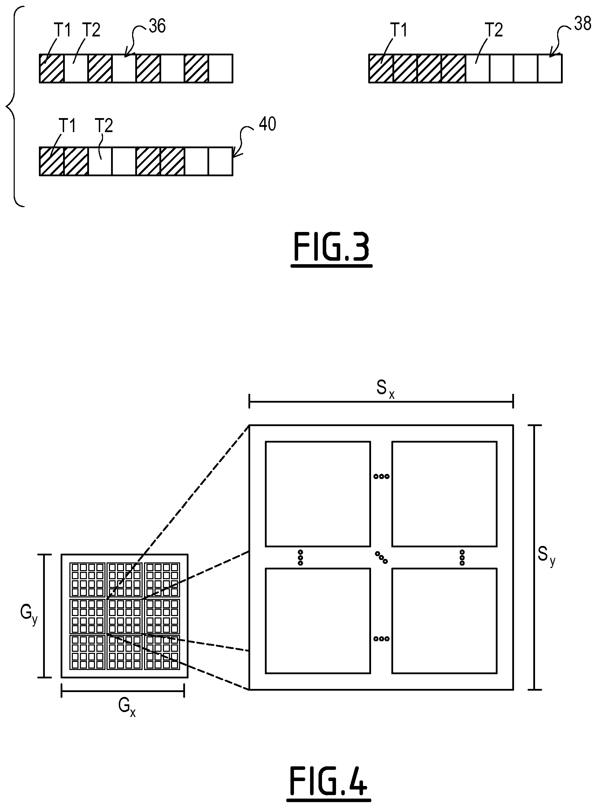

Une illustration schématique de découpage de traitement par rapport à un tableau d'espace de traitement monodimensionnel est donnée en figure 3.

Dans cet exemple, le tableau comprend huit « work-items » ou sous-ensembles de données à traiter, et, pour la simplicité de l'explication, seulement deux unités de traitement adaptées à mettre en œuvre deux tâches exécutables T1, T2 en parallèle sont considérées.

La figure 3 montre trois découpages de traitement 36, 38 et 40.

Dans chaque représentation des découpages de traitement, un carré hachuré représente un traitement par la tâche exécutable T1 et un carré non hachuré représente un traitement par la tâche exécutable T2.

Dans le premier découpage de traitement 36, les tâches exécutables en parallèle disponibles, T1 et T2, sont distribuées de manière alternée cyclique.

Dans le deuxième exemple de découpage de traitement 38, les tâches exécutables en parallèle disponibles sont regroupées par blocs de quatre sous-ensembles de données consécutifs.

Dans le troisième exemple de découpage de traitement 40, les tâches T1 et T2 prennent en charge des blocs de deux sous-ensembles de données consécutifs, de manière cyclique.

Ces divers découpages ont notamment un effet en termes d'accès mémoire consécutifs effectués par chacune de tâches exécutables, et il s'avère que selon l'architecture matérielle, les temps d'exécution peuvent différer, notamment à cause des temps d'accès mémoire en lecture/écriture ainsi que le temps de transfert des données via les bus de communication. En informatique, cela correspond au principe de localité spatiale et temporelle.

De manière plus générale, comme illustré à la figure 4 avec un tableau bi-dimensionnel, OpenCL offre la possibilité de définir l'ensemble de tâches exécutables en parallèle à effectuer sur les données, ou « work-items », les dimensions du tableau « global work size » étant notées Gx et Gy dans cet exemple.

Les tâches élémentaires ou « work-items » sont regroupées en groupes de tâches « work-groups » comportant chacun un même nombre de tâches 32, défini par le « local work size », ici défini par Sx et Sy.

Les tâches élémentaires d'un groupe de tâches sont aptes à communiquer et à se synchroniser pour un accès coordonné à la mémoire locale 28.

Les groupes de tâches 34 sont exécutés en parallèle, et le nombre maximal de tâches par groupe de tâches 34 est limité par les limites de la plateforme matérielle.

En respectant les contraintes de la plateforme matérielle en termes de nombre de tâches aptes à être lancées en parallèle, dépendant du nombre d'unités de traitement 18, de très nombreux découpages de traitement sont possibles, en particulier lorsque l'espace de traitement est multi-dimensionnel.

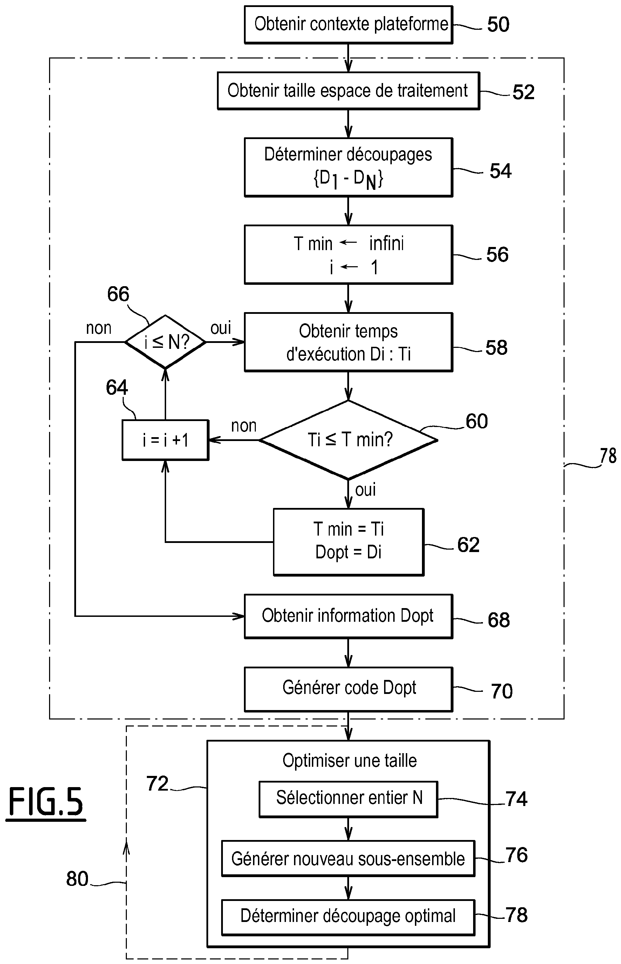

La figure 5 est un organigramme d'un procédé d'optimisation de traitement parallèle des données selon l'invention, l'optimisation considérée dans cet exemple de mise en œuvre étant une optimisation en termes de temps d'exécution, le critère d'optimisation associé étant la minimisation du temps d'exécution.

Le procédé est explicité ici pour un traitement donné, dans lequel sont fournies des données d'entrée à traiter, et des données traitées sont fournies en sortie.

Le traitement est adapté pour une mise en œuvre parallèle puisque le traitement comporte une répétition d'une même suite d'opérations, à effectuer sur des sous-ensembles de données d'entrée.

Bien sûr, une suite d'opérations peut se limiter à une seule opération effectuée sur un sous-ensemble réduit à une donnée d'entrée, par exemple un pixel d'une image.

Dans un exemple très simpliste, il est considéré une opération consistant à ajouter une valeur donnée v à la valeur de tous les pixels de l'image telle que présentée précédemment. Le traitement consiste alors à appliquer 1024x768 fois la même opération, à savoir l'addition de la valeur v. Mathématiquement, il peut être écrit que, pour tout entier p compris entre 1 et 1024 et tout entier q compris entre 1 et 768 :

$$I'(p,q)=I(p,q)+v$$

Où :

- I(p,q) est la valeur de l'image au pixel de coordonnées (p,q) avant application du traitement,
- I'(p,q) est la valeur de l'image au pixel de coordonnées (p,q) après application du traitement.

En termes de programmation, la répétition d'une suite d'opérations s'exprime en nombre de tours de boucles de calcul, par exemple des boucles « for » en langage C.

Par ailleurs, il est à noter qu'une application fonctionnelle peut comprendre plusieurs traitements successifs, indépendants les uns des autres. Dans ce cas, le procédé proposé est appliqué de manière analogue pour chacun des traitements compris dans l'application fonctionnelle.

Le procédé comprend une étape 50 consistant à obtenir le contexte de la plateforme matérielle 10 utilisée.

L'étape 50 est une étape préalable usuellement exécutée une seule fois.

En particulier, l'étape 50 comprend l'obtention du nombre maximal de tâches exécutables en parallèle par une unité de calcul 16 de la plateforme matérielle 10.

Par exemple, usuellement, les cartes graphiques NVIDIA® GTX supportent un nombre maximal de 1024 tâches exécutables simultanément par un multiprocesseur.

Le procédé comporte une étape 52 de détermination des tailles des sous-ensembles de données à traiter par une même suite d'opérations. Comme expliqué précédemment, les tailles dépendent des données d'entrée et des suites d'opérations à effectuer. En termes de spécification OpenCL, il s'agit de déterminer les tailles « global work size », selon ses une, deux ou trois dimensions, définissant l'espace de traitement matriciel multidimensionnel.

Plusieurs modes de réalisation pour la mise en œuvre de l'étape 52 de détermination des tailles des sous-ensembles de données à traiter sont envisagés.

Selon un premier mode de réalisation, en entrée du procédé est fourni un programme comportant des instructions de code écrit en un langage adapté pour l'exécution d'un code parallèle. Ce programme est, par exemple, écrit dans le langage OpenCL. Ce programme n'est pas optimisé pour assurer une configuration d'exécution tirant le meilleur parti de la plateforme matérielle.

Dans ce cas, l'information correspondant aux tailles de l'espace de traitement est simplement extraite des instructions de code du programme non optimisé fourni en entrée.

De plus, typiquement, le programme fourni comportant des instructions de code non optimisé définit un découpage initial « naïf » non optimisé, donc une taille initiale pour le « local work size ».

En variante, le procédé reçoit en entrée un graphe d'application définissant une application fonctionnelle, comportant un ou plusieurs traitements à effectuer.

Chaque traitement à effectuer est défini via le graphe d'application.

En pratique, il est possible d'utiliser un outil existant pour générer un graphe d'application à partir d'une application fonctionnelle.

L'étape 52 de détermination des tailles des sous-ensembles de données à traiter consiste alors à analyser le graphe d'application puis à le décomposer en traitements. Pour chaque traitement donné, la suite d'opérations à effectuer de manière répétitive est identifiée ainsi que le nombre d'appels ou le nombre de tours de boucle à calculer, qui est directement lié au nombre de données à traiter.

A titre d'exemple, à l'issue de l'étape 52 de détermination des tailles des sous-ensembles de données à traiter, pour un espace de traitement à trois dimensions, les tailles déterminées sont les suivantes :

- global_work_size[0] = 1999;
- global_work_size[1] = 32;
- global_work_size[2] = 16.

Le procédé comporte également une étape 54 de détermination d'un ensemble de découpages de l'espace de traitement, ou découpages de traitement, D1 à DN. Chaque découpage de traitement correspond au découpage de l'ensemble de données en un nombre de groupes de données et à l'assignation d'au moins une tâche exécutable, apte à exécuter la suite d'opérations, à chaque sous-ensemble de données du groupe de données.

En pratique, pour un dispositif de calcul 14 donné, chaque groupe du découpage comporte le même nombre de sous-ensembles de données, et le nombre total de tâches exécutables par groupe est inférieur ou égal au nombre maximal de tâches exécutables en parallèle fourni par la plateforme matérielle, obtenu à l'étape 50 d'extraction du contexte.

En termes de spécification OpenCL, la détermination de découpages consiste à déterminer diverses valeurs de « local work size » possibles.

Par exemple, pour l'espace de traitement à trois dimensions considéré précédemment, dont les dimensions sont les suivantes :

- global_work_size[0] = 1999;
- global_work_size[1] = 32;
- global_work_size[2] = 16.

Les découpages suivants sont testés:

D1 :

local_work_size[0] = 1;
local_work_size[1] = 1;
local_work_size[2] = 1.

D1 correspond à un découpage en 1999x32x16 groupes de tâches.
D2 :

local_work_size[0] = 1;
local_work_size[1] = 32;
local_work_size[2] = 16.

D2 correspond à 1999x1 x1 groupes de tâches.

Selon le mode de réalisation préféré, tous les découpages de traitement possibles sont déterminés à l'étape 54 de détermination d'un ensemble de découpages de traitement.

Dans l'exemple numérique explicité ci-dessus, l'ensemble des découpages comprend toutes les variantes de découpage en groupes de taille égale d'un espace matriciel à trois dimensions de taille 1999x32x16, ce qui donne une combinatoire assez élevée, mais gérable par un traitement automatique.

En variante, un nombre de découpages de traitement donné D, D≥ 2, est déterminé, en utilisant un ou plusieurs critères prédéterminés, prenant en compte par exemple le nombre maximal de tâches exécutables en parallèle par une unité de calcul 16 de la plateforme matérielle 10.

Le procédé comporte une étape 56 d'initialisation de valeurs. A cette étape 56 d'initialisation, un paramètre algorithmique Tmin, destiné, dans ce mode de réalisation, à mémoriser le temps minimum d'exécution, est initialisé à une très grande valeur, par exemple la valeur maximale disponible.

En outre, à cette étape 56 d'initialisation, un compteur i est initialisé à la valeur un.

Le procédé comporte une étape 58 d'obtention. A l'étape 58 d'obtention, un programme comportant des instructions de code de programmation correspondant au découpage de traitement Di est généré et l'exécution de ce programme est lancée sur la plateforme matérielle, afin d'obtenir une valeur d'une mesure de performance d'exécution, qui est dans ce mode de réalisation une mesure du temps d'exécution effectif Ti associé au découpage de traitement Di.

En variante, d'autres mesures de performance d'exécution, comme par exemple la consommation d'électricité, ou la dissipation thermique associées à une exécution ou une combinaison de différents critères, sont mises en œuvre à la place de la mesure de temps d'exécution. Pour chaque mesure mise en œuvre, un critère d'optimisation prédéterminé associé est pris en considération, permettant de sélectionner le découpage de traitement optimal correspondant.

En pratique, le traitement est de préférence effectué avec des données d'entrée quelconques, et non avec des données réelles d'une application fonctionnelle, puisque le temps d'exécution ne devrait pas être dépendant des valeurs des données d'entrée. Les différents sauts d'adresse étant limités dans le code initial, voire inexistants, l'utilisation de données d'entrée quelconques permet donc de réduire considérablement l'impact des données d'entrée sur l'exécution de chaque application.

En variante, afin d'éliminer l'influence de facteurs externes, l'exécution du programme correspondant au découpage de traitement Di est lancée un nombre donné de fois, par exemple 10 fois, et le temps correspondant au temps d'exécution est mémorisé pour chacune des exécutions. Ensuite, le temps d'exécution minimum est retenu dans la variable Ti.

De manière plus générale, l'exécution est lancée un nombre donné de fois, et la valeur de mesure Ti associée au découpage Di est obtenue par calcul d'une statistique des valeurs mémorisées, par exemple le minimum, la moyenne ou une statistique d'ordre supérieur. La statistique calculée est mémorisée comme valeur de mesure Ti de la performance d'exécution associée au découpage Di.

Le procédé comporte une étape 60 de sélection du découpage de traitement permettant d'obtenir une valeur de mesure optimale selon le critère prédéterminé.

L'étape 60 de sélection comprend un test 61 appliqué pour déterminer si la valeur du temps d'exécution Ti associé au découpage de traitement Di est inférieure à la valeur Tmin, le critère d'optimisation étant la minimisation du temps d'exécution dans ce mode de réalisation.

En cas de réponse positive, le procédé comporte une étape 62 dans laquelle la valeur de Tmin est mise à la valeur Ti et le découpage de traitement Di est enregistré comme découpage de traitement optimal Dopt. L'étape 62 suit le test 61. Le procédé comprend également une étape 64 d'incrémentation du compteur i de un, l'étape 64 suivant l'étape 62.

En cas de réponse négative au test 61, donc si le temps d'exécution estimé n'est pas inférieur à Tmin, le procédé comprend l'étape 64 d'incrémentation du compteur i précité.

Le procédé comporte alors un test 66 ayant pour objet de vérifier si le nombre maximal de découpages de traitement a été atteint.

Si ce n'est pas le cas, donc si i est inférieur ou égal au nombre total de découpages, le test 66 est suivi de l'étape 58 précédemment décrite.

Dans le cas contraire, tous les découpages de traitement prévus ont été testés, et le procédé comprend une étape 68 d'obtention d'informations relatives au découpage de traitement ayant le temps d'exécution le plus court, ou découpage de traitement optimal Dopt. Les informations de découpage sont récupérées, typiquement les informations définissant le « local work size » dans la mise en œuvre avec le langage de programmation OpenCL.

A l'issue de l'étape 68, pour le cas présenté l'espace de traitement à trois dimensions considéré précédemment, dont les dimensions sont les suivantes :

- global_work_size[0] = 1999;
- global_work_size[1] = 32;
- global_work_size[2] = 16,

le découpage optimal de traitement Dopt est caractérisé par :

- local_work_size[0] = 1;
- global_work_size[1] = 1;
- global_work_size[2] = 16.

Ces informations permettent ensuite de générer des instructions de code de programmation mettant en œuvre le découpage de traitement optimal en termes de temps d'exécution à l'étape 70.

Selon une première variante de mise en œuvre dans laquelle le procédé de l'invention est appliqué avec en entrée un programme comportant des instructions de code de programmation de type OpenCL non optimisé, l'étape 70 consiste typiquement à remplacer les valeurs de « local work size » initiales par les valeurs de « local work size » correspondant au découpage de traitement optimal.

Selon une deuxième variante de mise en œuvre, dans laquelle le procédé de l'invention est appliqué avec en entrée un graphe d'application, l'étape 70 consiste a générer effectivement un ensemble d'instructions de code de programmation, en langage OpenCL dans cet exemple de réalisation, mettant en œuvre le découpage de traitement optimal.

Selon une variante, les instructions de code de programmation correspondant à chaque découpage générées à l'étape 58 sont stockées en mémoire, et l'étape 70 consiste à simplement récupérer en mémoire les instructions de code de programmation correspondant au découpage de traitement optimal Dopt.

Il est bien entendu que des variantes de mises en œuvre, à la portée de l'homme du métier, font partie intégrante de l'invention. Par exemple, les étapes de détermination d'un découpage de traitement et d'obtention du temps d'exécution associé sont effectuées, en variante, en une seule étape.

Le code obtenu à l'issue de l'étape 70 sur une architecture NVIDIA GTX 480 a été testé par la demanderesse pour l'exemple étudié. Un temps d'exécution de 1480 millisecondes a été obtenu.

Pour améliorer encore ce temps d'exécution, le procédé comprend une étape 72 d'optimisation de la taille d'au moins un sous-ensemble de données à traiter.

Par optimisation, il est entendu dans le contexte de l'invention qu'un sous-ensemble de données présentant la taille optimisée permet d'obtenir une performance d'exécution améliorée par rapport à un sous-ensemble de données présentant la taille déterminée selon le critère choisi.

Selon une variante préférée, la taille optimisée est préférentiellement la taille pour le sous-ensemble de données considéré permettant d'obtenir une performance d'exécution optimale. L'optimisation est effectuée sur toutes les tailles du/des tableau(x) d'entrées arbitrairement par l'utilisateur via les différents premiers multiples supérieurs (2, 3, 4, etc) ou par rapport à une base de données spécifique à la cible comportant les différents premiers multiples souhaités. Les temps d'exécution sont ensuite récupérés pour chaque valeur du tableau d'entrée ce qui nous permet de les comparer et d'en déduire le temps d'exécution minimal.

A titre d'illustration, seule l'optimisation de la taille « global_work_size[0] » est considérée pour l'espace de traitement donné en exemple. La généralisation à plusieurs tailles est immédiate pour l'homme du métier.

L'étape 72 comprend une étape 74 de sélection d'au moins un nombre entier N supérieur à la taille déterminée du sous-ensemble considéré.

De préférence, le nombre entier N est inférieur ou égal à deux fois la taille déterminée du sous-ensemble considéré. Cela permet d'éviter le calcul d'un trop grand nombre de combinaisons possibles

Dans l'exemple considéré, N est strictement supérieur à 1999.

En outre, le nombre entier N est multiple de nombres inférieurs à la taille déterminée du sous-ensemble considéré.

Plusieurs modes de réalisation sont envisagés pour le choix des nombres inférieurs à la taille déterminée du sous-ensemble considéré.

A titre d'exemple, les nombres inférieurs à la taille déterminée du sous-ensemble considéré sont les nombres premiers compris entre 2 et 9, à savoir 2, 3, 5 et 7 et le nombre entier N est le premier multiple d'un des nombres premiers.

Dans ce cas, le nombre entier sélectionné à l'issue de l'étape 74 est 2000

En variante, le nombre entier N est le premier multiple des différents nombres premiers 2, 3, 5 et 7. Dans ce cas, le nombre entier sélectionné à l'issue de l'étape 74 est 2100.

En variante, les nombres inférieurs à la taille déterminée du sous-ensemble considéré sont 2, 4 et 8. Choisir des multiples de deux est favorable dans la mesure où les architectures contiennent généralement un nombre pair de cœurs.

D'autres multiples que les multiples de deux sont envisageables en fonction de l'architecture spécifique du système informatique considéré.

Selon encore une autre variante, les nombres inférieurs à la taille déterminée du sous-ensemble considéré sont issus d'un fichier paramétrable.

Par exemple, ce fichier paramétrable est adapté à la mise en œuvre d'une méthode de sélection impliquant une technique d'apprentissage.

Les critères d'apprentissage sont définis en suivant le choix d'un expert. L'expert identifie les découpages qu'il considère les plus pertinents.

Par identification successive, la technique d'apprentissage permet d'obtenir des critères de sélection automatique.

Il en résulte que le nombre de multiples à tester est diminué. Le temps de mise en œuvre du procédé diminue ainsi fortement.

En variante, au lieu d'impliquer un seul expert, les choix de plusieurs experts sont utilisés pour identifier les découpages les plus pertinents. Cela permet de bénéficier du savoir-faire de plusieurs experts en un seul procédé.

Pour la suite, il est supposé qu'un des nombres entiers sélectionnés à l'issue de l'étape 74 est 2000.

L'étape 72 comprend alors une étape 76 de génération d'un sous-ensemble de calcul ayant pour taille le nombre entier sélectionné à partir du sous-ensemble et comprenant toutes les données du sous-ensemble considéré.

Il est ainsi proposé de compléter le sous-ensemble avec des données fictives pour obtenir un nouvel espace de traitement à trois dimensions considéré précédemment, dont les dimensions sont les suivantes :

- global_work_size[0] = 2000;
- global_work_size[1] = 32;
- global_work_size[2] = 16.

L'étape 72 comprend une étape 78 de détermination du découpage optimal pour ce nouvel espace de traitement.

A titre d'exemple, l'étape 78 est mise en œuvre en appliquant les étapes 52 à 70 au nouvel espace de traitement à trois dimensions. Cet exemple de réalisation est indiqué schématiquement par un cadre en pointillés sur la figure 5.

A l'issue de l'étape 78, le découpage optimal de traitement Dopt obtenu est caractérisé par :

- local_work_size[0] = 80;
- local_work_size[1] = 1;
- local_work_size[2] = 2.

En outre, le code obtenu à l'issue de l'étape 78 sur une architecture NVIDIA GTX 480 a été testé par la demanderesse pour l'exemple étudié. Un temps d'exécution de 170 millisecondes a été obtenu.

Ainsi, il est constaté une augmentation de la vitesse d'exécution d'un traitement allant jusqu'à un facteur de dix entre une programmation suivant un découpage de traitement optimal sur l'espace de données à traiter et une programmation suivant un découpage de traitement optimal sur un espace de données à traiter de taille optimisée.

Dans le cas illustré, 32*16 opérations supplémentaires sont effectuées mais la meilleure répartition des calculs sur les cœurs parallèles permet de gagner un temps d'exécution supérieur au retard lié à la réalisation des 32*16 opérations supplémentaires.

Bien entendu, il est possible d'itérer l'étape 72 autant que souhaité pour tenter de diminuer encore plus le temps d'exécution. Dans le cas présenté précédemment, après une valeur de 2000 pour la taille du global_work_size[0], l'opération correspondant à l'étape 72 est réitérée avec le nombre entier N = 2001 (car premier multiple de 3 à partir de 1999) choisi à l'étape 74 de sélection d'au moins un nombre entier N, puis l'opération correspondant à l'étape 72 est réitérée pour tous les premiers multiples de la liste, si et seulement si, ils n'ont pas déjà été utilisés. A titre d'exemple, l'entier N=2000 ne sera utilisé qu'une seule fois pour le découpage bien qu'il soit multiple de 2 et de 5. Cette possibilité de réitération de l'étape 72 est indiquée par la flèche 80 pointillés sur la figure 5.

La taille optimisée obtenue à l'issue de l'étape 72 correspondra à la taille donnant le temps d'exécution le plus faible.

Selon encore une autre variante, à l'étape de sélection de découpages de traitement permettant d'obtenir une valeur de mesure optimale selon le critère choisi, plusieurs découpages remplissent le critère choisi. Pour sélectionner un découpage parmi les découpages de traitement sélectionnés, il est proposé de manière additionnelle d'utiliser un autre critère choisi. Dans ce cas, le critère choisi à l'étape de sélection de découpages est un premier critère appelé le critère majeur alors que l'autre critère est un deuxième critère qualifié de critère secondaire.

Le procédé comporte ainsi une étape de première sélection selon le premier critère permettant d'obtenir une pluralité de découpages de traitement et une étape de deuxième sélection selon le deuxième critère permettant de sélectionner un découpage de traitement. En ce sens, l'étape de première sélection est une étape de sélection moins fine que l'étape de deuxième sélection.

L'étape de deuxième sélection est, par exemple, mise en œuvre par un tri des données. Tout autre mode de réalisation permettant de déterminer parmi les découpages de traitement sélectionnés à l'étape de première sélection est, toutefois, envisageable.

A titre d'illustration, si l'application étudiée est une application temps réel, le premier critère est un critère de performance en temps d'exécution de l'application et le deuxième critère choisi est alors une moindre consommation électrique lors de l'exécution. Le découpage obtenu présente ainsi un temps de calcul inférieur à une limite donnée avec une consommation plus faible. La mise en œuvre du procédé permet alors d'obtenir un découpage présentant un temps de calcul respectant les contraintes temps réel données et résolvant au moins en partie les problématiques dite de « greencomputing », terme anglais correspondant à « informatique éco-responsable ».

Selon un autre exemple, l'application étudiée est une application embarquée en temps non-réel. Dans ce cas, le premier critère est le respect d'une enveloppe thermique donnée et le deuxième critère est un critère de performance en temps d'exécution de l'application. La mise en œuvre du procédé permet alors d'obtenir un découpage qui présente un temps de calcul optimal tout en respectant des contraintes d'implémentations.

Ainsi, dans cette variante, la mise en œuvre du procédé permet alors d'obtenir un découpage respectant deux critères. Ceci est particulièrement avantageux lorsque l'application du premier critère donne une pluralité de solutions. Il est d'ailleurs à noter que le premier critère peut être modifié pour qu'une pluralité de solutions existent. Par exemple, le temps d'exécution d'application peut être plus long que le temps optimum si pour l'utilisateur, il n'y a aucune différence perçue. Ainsi sera choisi un découpage ne correspondant pas au temps d'exécution optimal mais restant suffisamment rapide par rapport à l'application visée pour respecter un autre critère secondaire avantageux.

Pour améliorer cet effet, selon un mode de réalisation, une pluralité d'étapes de sélection sont effectuées en modifiant le critère à chaque étape de sélection. Par exemple, le procédé comporte une étape de première sélection de découpages de traitement selon un premier critère, qui est le critère majeur, puis une étape de deuxième sélection de découpages de traitement selon un deuxième critère parmi les découpages de traitement sélectionnés à l'étape de première sélection, puis une étape de troisième sélection de découpages de traitement selon un troisième critère parmi les découpages de traitement sélectionnés à l'étape de deuxième sélection et une étape de quatrième sélection d'un découpage de traitement selon un quatrième critère parmi les découpages de traitement sélectionnés à l'étape de troisième sélection. Les quatre critères sont différents. Ainsi, à l'issue de ce procédé, il est obtenu un découpage vérifiant les quatre critères.

L'invention a été décrite plus particulièrement dans le cas de l'utilisation du langage de programmation parallèle OpenCL. En variante, il est possible par exemple d'utiliser le procédé d'optimisation de traitement parallèle de l'invention avec d'autres langages de programmation parallèle au comportement similaire, par exemple avec le langage CUDA, langage propriétaire de la société NVIDIA.

La terminologie CUDA exprime le découpage en "thread blocks" et en "grid", exprimés dans un espace n dimensionnel, avec n compris entre 1 et 3 (matrices à trois dimensions) :

- les "blocks" déterminent le nombre de traitements exécutables en parallèle sur les unités de calculs 18 d'une même unité de calcul 16. Ils sont équivalents aux "local_work_size" en langage OpenCL.
- la "grid", qui exprime le nombre de "blocks" qui vont être répétés pour réaliser l'intégralité du traitement à effectuer.

L'adaptation du procédé de l'invention appliqué au langage CUDA fera varier la taille des "blocks" et de la "grid", de manière à déterminer la taille des block/grid optimal au sens d'un critère prédéterminé, qui permet d'atteindre par exemple une meilleure performance en temps de calcul ou une consommation électrique plus faible. En effet, dans le cas de l'application du langage CUDA, le fait de faire varier les tailles des éléments « blocks » et « grid » revient à réaliser une pluralité de découpages de traitement, ces divers découpages de traitement étant ensuite testés pour déterminer un découpage de traitement optimal au sens du critère prédéterminé, comme expliqué dans le mode de réalisation détaillé ci-dessus en référence à la figure 5.

Avantageusement, l'invention permet d'optimiser le traitement parallèle des données de manière adaptative par rapport à toute plateforme matérielle disponible.

Il est également à noter que l'invention fonctionne aussi pour des procédures de tests et de fiabilité.

A titre d'exemple, si un cœur d'une architecture à quatre cœurs est défectueux, il est possible de mettre en œuvre l'invention sur seulement trois cœurs sur les quatre.

Par extension, cette propriété montre la modularité du procédé proposé. Notamment, dans le même exemple que précédemment, si l'utilisateur du procédé choisit d'allouer un cœur d'une architecture à quatre cœurs pour une autre application, il est possible de mettre en œuvre le procédé en l'appliquant à l'architecture à trois cœurs disponible. Pour l'utilisateur du procédé, cela rend le procédé adaptable à l'utilisation spécifique des cœurs de l'architecture considérée, en prenant en charge la disponibilité de ces cœurs.

**Revendications**

1. Procédé d'optimisation de traitement parallèle de données sur une plateforme matérielle, la plateforme matérielle comprenant :

   - au moins une unité de calcul comprenant une pluralité d'unités de traitement aptes à exécuter en parallèle une pluralité de tâches exécutables sur un espace de traitement, l'espace de traitement étant un espace dans lequel une même suite d'opérations est effectué sur l'ensemble des données, l'espace de traitement étant décomposable en sous-ensembles de traitement, chaque sous-ensemble réalisant ce même traitement sur un sous-ensemble de données,

   le procédé étant **caractérisé en ce que** le procédé comprend les étapes de :

   - obtention d'un nombre maximal de tâches exécutables en parallèle par une unité de calcul de la plateforme matérielle,
   - détermination des tailles des sous-ensembles de données de l'espace de traitement par une même suite d'opérations pour obtenir des tailles déterminées,
   - optimisation de la taille d'au moins un sous-ensemble de données de l'espace de traitement, l'optimisation comprenant une étape de :

      - sélection, pour au moins un sous-ensemble considéré, d'au moins un nombre entier strictement supérieur à la taille déterminée et multiple de nombres inférieurs à la taille déterminée du sous-ensemble considéré, le ou les nombres inférieurs à la taille prédéterminée du sous-ensemble considéré étant de préférence 2, 4 ou 8,
      - génération, pour chaque sous-ensemble considéré à l'étape de sélection, d'un sous-ensemble de calcul ayant pour taille le nombre entier sélectionné à partir du sous-ensemble et comprenant toutes les données du sous-ensemble considéré, le sous-ensemble de calcul remplaçant le sous-ensemble de données considéré dans l'espace de traitement, pour obtenir un nouvel espace de traitement,

   l'optimisation étant mise en œuvre de manière à obtenir une mesure de performance d'exécution améliorée pour le nouvel espace de traitement par rapport à la mesure de performance d'exécution obtenue pour l'espace de traitement dans lequel le sous-ensemble de données considéré a la taille déterminée selon au moins un critère choisi, la mesure étant associée à l'exécution d'un programme comportant des instructions de code de programme mettant en œuvre un découpage de traitement correspondant au découpage de l'espace de traitement considéré en sous-ensembles de données, et à l'assignation d'au moins une tâche exécutable, apte à exécuter ladite suite d'opérations, à chaque sous-ensemble de données, le nombre total de tâches exécutables par sous-ensemble de données étant inférieur ou égal audit nombre maximal de tâches.

2. Procédé selon la revendication 1, dans lequel les nombres inférieurs à la taille déterminée du sous-ensemble considéré sont issus d'un fichier paramétrable.

3. Procédé selon la revendication 1 ou 2, dans lequel l'étape d'optimisation comprend pour chaque taille de sous-ensemble, une étape de :

   - détermination du découpage de traitement permettant de minimiser la mesure de performance d'exécution associée à l'exécution d'un programme comportant des instructions de code de programme mettant en œuvre le découpage de traitement.

4. Procédé selon la revendication 3, dans lequel l'étape de détermination du découpage de traitement comporte, en outre, une étape de :

   - détermination d'au moins deux découpages de traitement,
   - obtention d'un programme comportant des instructions de code de programmation mettant en œuvre ledit découpage de traitement,
   - obtention de la valeur d'une mesure de performance d'exécution associée au critère choisi et à l'exécution dudit programme sur ladite plateforme matérielle,
   - sélection du découpage de traitement permettant d'obtenir une valeur de mesure optimale respectant le critère choisi.

5. Procédé selon la revendication 3, dans lequel les critères choisis comprennent un premier critère et un deuxième critère différent du premier critère, l'étape de détermination du découpage de traitement comportant, en outre, une étape de :

   - détermination d'au moins deux découpages de traitement,
   - obtention d'un programme comportant des instructions de code de programmation mettant en œuvre ledit découpage de traitement,
   - obtention de la valeur de mesures de performance d'exécution associées respectivement au premier critère et au deuxième critère et à l'exécution dudit programme sur ladite plateforme matérielle,

- première sélection des découpages de traitement permettant d'obtenir une pluralité de valeurs de mesure optimale respectant le premier critère choisi,

- deuxième sélection du découpage de traitement permettant d'obtenir une valeur de mesure optimale selon le deuxième critère choisi parmi les découpages de traitement sélectionnés à l'étape de première sélection.

6. Procédé selon la revendication 4 ou 5, dans lequel le procédé comporte, en outre, une étape de :

- obtention d'informations permettant de générer des instructions de code de programmation mettant en œuvre ledit découpage de traitement sélectionné.

7. Procédé selon la revendication 5, dans lequel ladite valeur d'une mesure de performance d'exécution associée au premier critère est un temps d'exécution sur ladite plateforme matérielle.

8. Produit programme d'ordinateur comportant des instructions de code de programmation qui, lors qu'elles sont mises en œuvre par un processeur, mettent en œuvre un procédé d'optimisation de traitement parallèle de données sur une plateforme matérielle selon l'une quelconque des revendications 1 à 7.

**Patentansprüche**

1. Verfahren zum Optimieren der parallelen Verarbeitung von Daten auf einer Hardware-Plattform, wobei die Hardware-Plattform aufweist:

- mindestens eine Recheneinheit, welche eine Mehrzahl von Verarbeitungseinheiten aufweist, welche imstande sind, parallel eine Mehrzahl von ausführbaren Aufgaben in einem Verarbeitungsraum auszuführen, wobei der Verarbeitungsraum ein Raum ist, in welchem eine gleiche Abfolge von Vorgängen an der Gruppe der Daten durchgeführt wird, wobei der Verarbeitungsraum in Verarbeitungsuntergruppen zerlegbar ist, wobei jede Untergruppe diese gleiche Verarbeitung an einer Datenuntergruppe realisiert,

wobei das Verfahren **dadurch gekennzeichnet ist, dass** das Verfahren die Schritte aufweist des:

- Erlangens einer maximalen Zahl von parallel ausführbaren Aufgaben mittels einer Recheneinheit der Hardware-Plattform,

- Ermittelns von Größen der Datenuntergruppen des Verarbeitungsraums mittels einer gleichen Abfolge von Vorgängen, um ermittelte Größen zu erlangen,

- Optimieren der Größe von mindestens einer Datenuntergruppe des Verarbeitungsraums, wobei das Optimieren aufweist einen Schritt des:

- Auswählens, für mindestens eine in Betracht gezogene Untergruppe, mindestens einer ganzen Zahl, welche strikt größer ist als die ermittelte Größe, und mehrerer Zahlen, welche kleiner sind als die ermittelte Größe der in Betracht gezogenen Untergruppe, wobei die Zahl oder die Zahlen, welche kleiner sind als die vorbestimmte Größe der in Betracht gezogenen Untergruppe, vorzugsweise 2, 4 oder 8 sind,

- Erzeugens, für jede im Schritt des Auswählens in Betracht gezogene Untergruppe, einer Rechenuntergruppe, welche als Größe die ausgehend von der Untergruppe ausgewählte ganze Zahl hat und alle Daten der in Betracht gezogenen Untergruppe aufweist, wobei die Rechenuntergruppe die in Betracht gezogene Datenuntergruppe im Verarbeitungsraum ersetzt, um einen neuen Verarbeitungsraum zu erlangen,

wobei das Optimieren durchgeführt wird, um eine verbesserte Ausführungsleistungsmessung für den neuen Verarbeitungsraum im Vergleich zur Ausführungsleistungsmessung zu erlangen, welche für den Verarbeitungsraum erlangt wird, in welchem die in Betracht gezogene Datenuntergruppe die Größe hat, welche gemäß mindestens einem ausgewählten Kriterium ermittelt wird, wobei die Messung assoziiert ist mit dem Ausführen eines Programms, welches Programmcodeanweisungen aufweist, welche eine Verarbeitungsaufteilung durchführen, welche zur Aufteilung des in Betracht gezogenen Verarbeitungsraums in Datenuntergruppen korrespondiert, und mit dem Zuordnen mindestens einer ausführbaren Aufgabe, welche imstande ist, die besagte Abfolge von Vorgängen auszuführen, zu jeder Datenuntergruppe, wobei die Gesamtzahl an ausführbaren Aufgaben pro Datenuntergruppe kleiner oder gleich ist zur besagten maximalen Zahl an Aufgaben.

2. Verfahren gemäß Anspruch 1, wobei die Zahlen, die kleiner sind als die ermittelte Größe der in Betracht gezogenen Untergruppe, aus einer parametrierbaren Datei stammen.

**3.** Verfahren gemäß Anspruch 1 oder 2, wobei der Schritt des Optimierens aufweist, für jede Untergruppengröße, einen Schritt des:

- Ermittelns der Verarbeitungsaufteilung, welche es erlaubt, die Ausführungsleitungsmessung zu minimieren, welche mit dem Ausführen eines Programms assoziiert ist, welches Programmcodeanweisungen aufweist, welche die Verarbeitungsaufteilung durchführen.

**4.** Verfahren gemäß Anspruch 3, wobei der Schritt des Ermittelns der Verarbeitungsaufteilung ferner aufweist einen Schritt des:

- Ermittelns mindestens zweier Verarbeitungsaufteilungen,
- Erlangens eines Programms, welches Programmiercodeanweisungen aufweist, welche die besagte Verarbeitungsaufteilung durchführen,
- Erlangens des Wertes einer Ausführungsleistungsmessung, welche mit dem ausgewählten Kriterium und der Ausführung des besagten Programms auf der besagten Hardware-Plattform assoziiert ist,
- Auswählens der Verarbeitungsaufteilung, welche es erlaubt, einen optimalen Messwert zu erlangen, welcher das ausgewählte Kriterium einhält.

**5.** Verfahren gemäß Anspruch 3, wobei die ausgewählten Kriterien ein erstes Kriterium und ein vom ersten Kriterium verschiedenes zweites Kriterium aufweisen, wobei der Schritt des Ermittelns der Verarbeitungsaufteilung ferner aufweist einen Schritt des:

- Ermittelns mindestens zweier Verarbeitungsaufteilungen,
- Erlangens eines Programms, welches Programmiercodeanweisungen aufweist, welche die besagte Verarbeitungsaufteilung durchführen,
- Erlangens des Wertes von Ausführungsleistungsmessungen, welche jeweilig mit dem ersten Kriterium und dem zweiten Kriterium und mit der Ausführung des besagten Programms auf der besagten Hardware-Plattform assoziiert sind,
- ersten Auswählens der Verarbeitungsaufteilungen, welche es erlauben, eine Mehrzahl von optimalen Messwerten zu erlangen, welche das erste ausgewählte Kriterium erfüllen,
- zweiten Auswählens der Verarbeitungsaufteilung, welche es erlaubt, einen optimalen Messwert gemäß dem zweiten Kriterium, welches ausgewählt ist aus den Verarbeitungsaufteilungen, welche im Schritt des ersten Auswählens ausgewählt werden, zu erlangen.

**6.** Verfahren gemäß Anspruch 4 oder 5, wobei das Verfahren ferner aufweist einen Schritt des:

- Erlangens von Informationen, welche es erlauben, Programmiercodeanweisungen zu erzeugen, welche die besagte ausgewählte Verarbeitungsaufteilung durchführen.

**7.** Verfahren gemäß Anspruch 5, wobei der besagte Wert einer Ausführungsleistungsmessung, welcher mit dem ersten Kriterium assoziiert ist, eine Ausführungszeit auf der besagten Hardware-Plattform ist.

**8.** Computerprogrammprodukt, welches Programmiercodeanweisungen aufweist, welche, wenn sie mittels eines Prozessors durchgeführt werden, ein Verfahren zum Optimieren der parallelen Verarbeitung von Daten auf einer Hardware-Plattform gemäß irgendeinem der Ansprüche 1 bis 7 durchführen.

**Claims**

**1.** A method for optimizing the parallel processing of data on a hardware platform, the hardware platform comprising:

- at least one computing unit comprising a plurality of processing units able to execute a plurality of work items in parallel in a processing space, the processing space being a space in which a same sequence of operations is carried out on all of the data, the processing space being able to be broken down into processing subsets, each subset performing the same processing on a data subset,

the method being **characterized in that** the method comprises the following steps:

- obtaining a maximum number of work items executable in parallel by a computing unit of the hardware platform,
- determining sizes of the data subsets of the processing space through a same sequence of operations to obtain determined sizes,
- optimizing the size of at least one data subset of the processing space, the optimization comprising a step for:

- selecting, for at least one considered subset, at least one integer number strictly greater than the determined size and multiple numbers smaller than the determined size of the considered subset, the number(s) smaller than the determined size of the considered subset preferably being 2, 4 or 8,

- generating, for each subset considered in the selection step, a computation subset having, as size, the integer selected from the subset and comprising all of the data of the considered subset, the computing subset replacing the data subset considered in the processing space, to obtain a new processing space,

the optimization being implemented so as to obtain an improved execution performance measurement for the new processing space relative to the execution performance measurement obtained for the processing space in which the considered data subset has the determined size according to at least one chosen criterion, the measurement being associated with the execution of a program including program code instructions implementing a processing partition corresponding to the partitioning of the considered processing space into data subsets, and assigning at least one executable work item, able to execute said sequence of operations, to each data subset, the total number of executable items per data subset being less than or equal to said maximum number of items.

2. The method according to claim 1, wherein the numbers smaller than the determined size of the considered subset come from a configurable file.

3. The method according to claim 1 or 2, wherein the optimization step comprises, for each subset size, a step for:

   - determining the processing partition making it possible to minimize the execution performance measurement associated with the execution of a program including program code instructions implementing the processing partition.

4. The method according to claim 3, wherein the step for determining the processing partition further includes a step for:

   - determining at least two processing partitions,
   - obtaining a program including programming code instructions implementing said selected processing partition,
   - obtaining the value of an execution performance measurement associated with the first chosen criterion and the execution of said program on said hardware platform.
   - selecting a processing partition making it possible to obtain an optimal measurement value respecting the chosen criterion.

5. The method according to claim 3, wherein the chosen criteria comprise a first criterion and a second criterion different from the first criterion, step for determining the processing partition further including a step for:

   - determining at least two processing partitions,
   - obtaining a program including programming code instructions implementing said selected processing partition,
   - obtaining the value of execution performance measurements respectively associated with the first chosen criterion and the second chosen criterion and with the execution of said program on said hardware platform,
   - first selection of processing partitions making it possible to obtain a plurality of optimal measurement values respecting the first chosen criterion,
   - second selection of the processing partition making it possible to obtain an optimal measurement value according to the second chosen criterion from among the processing partitions selected in the first selection step.

6. The method according to claim 4 or 6, wherein the method further includes a step for:

   - obtaining information making it possible to generate programming code instructions implementing said selected processing partition.

7. The method according to any one of claims 1 to 6, wherein said value of an execution performance measurement associated with the first criterion is a work time on said hardware platform.

8. A computer program product comprising programming code instructions which, when implemented by a processor, implement a method for optimizing the parallel processing of data on a hardware platform according to any one of claims 1 to 7.

## FIG.1

## FIG.2

## FIG.3

## FIG.4

```
Obtenir contexte plateforme ── 50

Obtenir taille espace de traitement ── 52

Déterminer découpages
{D₁ - Dₙ} ── 54

T min ← infini
i ← 1 ── 56

66  non ← i ≤ N? → oui   Obtenir temps
                          d'exécution Di : Ti ── 58

64                        Ti ≤ T min? ── 60
     non ← i = i +1

                          oui
                          T min = Ti
                          Dopt = Di ── 62

Obtenir information Dopt ── 68

Générer code Dopt ── 70

78

Optimiser une taille
72   Sélectionner entier N ── 74

     Générer nouveau sous-ensemble ── 76

     Déterminer découpage optimal ── 78

80
```

FIG.5

**EP 3 019 957 B1**

**Documents brevets cités dans la description**

- WO 2010092483 A